# EUROPEAN PATENT SPECIFICATION

(11) **EP 3 852 485 B1**
(45) Date of publication and mention of the grant of the patent: **29.10.2025**
(21) Application number: 19859587.8
(22) Date of filing: 11.09.2019
(51) Int. Cl.: H04W 48/16, H04W 48/18, H04W 48/08, H04W 16/14, H04W 88/06

(54) **METHOD AND APPARATUS FOR TRANSMITTING OR RECEIVING DATA IN WIRELESS COMMUNICATION SYSTEM**
VERFAHREN UND VORRICHTUNG ZUM SENDEN ODER EMPFANGEN VON DATEN IN EINEM DRAHTLOSEN KOMMUNIKATIONSSYSTEM
PROCÉDÉ ET APPAREIL D'ÉMISSION OU DE RÉCEPTION DE DONNÉES DANS UN SYSTÈME DE COMMUNICATION SANS FIL

(30) Priority: 14.09.2018 KR 20180110466
(43) Date of publication of application: 21.07.2021
(73) Proprietor: Samsung Electronics Co., Ltd., Suwon-si, Gyeonggi-do 16677 (KR)
(72) Inventor: KIM, Sangbum, Suwon-Si, Gyeonggi-do 16677 (KR); KIM, Soenghun, Suwon-Si, Gyeonggi-do 16677 (KR)
(74) Representative: Nederlandsch Octrooibureau
(86) International application number: PCT/KR2019/011784
(87) International publication number: WO 2020/055137

(56) References cited:
- WO-A1-2016/198825
- WO-A1-2016/198825
- KR-A- 20170 134 529
- US-A1- 2018 220 458
- US-A1- 2018 220 458
- NOKIA ET AL: "Cell reselection in Inactive and Idle mode", vol. RAN WG2, no. Gothenburg, Sweden; 20180820 - 20180824, 10 August 2018 (2018-08-10), XP051521913, Retrieved from the Internet <URL:http://www.3gpp.org/ftp/tsg%5Fran/WG2%5FRL2/TSGR2%5F103/Docs/R2%2D1812306%2Ezip> [retrieved on 20180810]
- LG ELECTRONICS INC: "Cell reselection on unlicensed frequency", vol. RAN WG2, no. Gothenburg, Sweden; 20180820 - 20180824, 10 August 2018 (2018-08-10), XP051522391, Retrieved from the Internet <URL:http://www.3gpp.org/ftp/tsg%5Fran/WG2%5FRL2/TSGR2%5F103/Docs/R2%2D1812799%2Ezip> [retrieved on 20180810]
- NOKIA ET AL.: "Cell reselection in Inactive and Idle mode", R2-1812306. 3GPP TSG-RAN WG2 MEETING #103, vol. RAN WG2, 10 August 2018 (2018-08-10), Gothenburg, Sweden, XP051521913
- LG ELECTRONICS: "Cell reselection on unlicensed frequency", R2-1812799. 3GPP TSG-RAN WG2 MEETING #103, vol. RAN WG2, 10 August 2018 (2018-08-10), Gothenburg, Sweden, XP051522391

## Description

### TECHNICAL FIELD

The present disclosure relates to a method and apparatus for transmitting and receiving data in a wireless communication system.

### BACKGROUND ART

To meet the soaring demand with respect to wireless data traffic because of the commercialization of 4^{th}-generation (4G) communication systems, efforts have been made to develop improved 5^{th}-generation (5G) communication systems or pre-5G communication systems. For this reason, 5G communication systems or pre-5G communication systems are also referred to as beyond-4G-network communication systems or post-long term evolution (LTE) systems. For higher data transmission rates, implementation of 5G communication systems in ultra-high frequency bands (mmWave), such as, e.g., 60GHz, is being considered. To reduce path loss and increase a transmission distance in the ultra-high frequency band for the 5G communication system, various technologies such as beamforming, massive multi-input multi-output (MIMO), full dimensional MIMO (FD-MIMO), array antennas, analog beamforming, and large-scale antennas have been researched and discussed. To improve system networks, in 5G communication systems, various technologies such as evolved small cell, advanced small cell, cloud radio access network (RAN), ultra-dense network, device to device (D2D) communication, wireless backhaul, moving network, cooperative communication, coordinated multi-points (CoMPs), and interference cancellation have been developed. In addition, for 5G communication systems, advanced coding modulation (ACM) schemes including hybrid frequency-shift keying (FSK) and quadrature amplitude modulation (QAM) modulation (FQAM) and sliding window superposition coding (SWSC), and advanced access schemes including filter bank multi carrier (FBMC), non-orthogonal multiple access (NOMA), and sparse code multiple access (SCMA) have been developed.

The Internet has evolved from a human-oriented connectivity network, where humans generate and consume information, to the Internet of Things (IoT) where distributed entities, such as objects, exchange and process information. The Internet of Everything (IoE) has also emerged, which is a combination of the IoT technology and Big Data processing technology through connection with a cloud server, etc. To implement the IoT, various technological elements, such as sensing technology, wired/wireless communication and network infrastructure, service interface technology, and security technology, are required, and recently technologies related to sensor networks for connecting objects, machine to machine (M2M), machine type communication (MTC), and so forth have been researched. Such an IoT environment may provide intelligent Internet technology (IT) services that create new value in human life by collecting and analyzing data generated among connected objects. IoT may be applied to a variety of fields including smart homes, smart buildings, smart cities, smart cars or connected cars, smart grids, health care, smart appliances, advanced medical services, and so forth through convergence and combination between existing IT and various industries.

Thus, various attempts have been made to apply 5G communication systems to IoT networks. For example, 5G communication technology such as a sensor network, M2M, MTC, etc., has been implemented by a scheme such as beamforming, MIMO, array antennas, and so forth. Application of the cloud RAN as the Big Data processing technology may also be an example of convergence of 5G technology and IoT technology.

As described above, various services may be provided as mobile communication systems develop, and accordingly, ways of effectively providing such services are required.
US 2018/0220458 A1 describes a terminal device including a reception unit configured to receive higher layer signaling including a first configuration relating to measurement of a Received Signal Strength Indicator (RSSI) and a second configuration relating to reporting of the RSSI, a measurement unit configured to measure the RSSI and/or a channel occupancy; and a transmission unit configured to report a measurement result for the RSSI and/or the channel occupancy. The measurement result for the RSSI is an average of measurement results obtained in a first period, and the channel occupancy is obtained based on the measurement results equal to or greater than a first threshold among the measurement results obtained in the first period.
WO 2016/198825 A1 describes a method in a terminal of a wireless communications system, the wireless communications system comprising the terminal and base stations providing cells which can be selected to serve the terminal, the method comprising: the terminal accessing cell combination information about the operation of a potential serving cell in combination with at least one other cell to communicate with the terminal; and the terminal applying one or more criteria to choose whether to monitor broadcast messages from the potential serving, the criteria including at least one criterion based on the cell combination information.
3GPP TSG-RAN WG2 Meeting #103, R2-1812306, Sweden 20-24 August 2018, Nokia, Nokia Shanghai Bell, Cell reselection in Inactive and Idle mode, proposes a solution to the issue that during idle/inactive state mobility RAN2 should "assume that there may be multiple PLMNs on one frequency (that do not share)".

### DESCRIPTION OF EMBODIMENTS

### TECHNICAL PROBLEM

Disclosed embodiments provide a method and apparatus for effectively providing a service in a mobile communication system.

Such are defined in the appended claims.

### SOLUTION TO PROBLEM

Disclosed embodiments provide a communication method and communication apparatus for effectively providing a service in a mobile communication system.

### ADVANTAGEOUS EFFECTS OF DISCLOSURE

A communication method and a communication apparatus according to disclosed embodiments and according to the appended claims may effectively provide a service in a mobile communication system.

### BRIEF DESCRIPTION OF DRAWINGS

FIG. 1A illustrates a structure of a next-generation mobile communication system according to an embodiment of the present disclosure.
FIG. 1B is a diagram for describing a wireless connection state transition in a next-generation mobile communication system according to an embodiment of the present disclosure.
FIG. 1C is a diagram for describing a scenario where a handover fails due to a listen-before-talk (LBT) failure in a next-generation mobile communication system operating in an unlicensed frequency band, according to an embodiment of the present disclosure.
FIG. 1D is a diagram for describing a user equipment (UE) operation to perform a resume process based on a condition, according to an embodiment of the present disclosure.
FIG. 1E is a flowchart of a UE operation to perform a resume process based on a condition, according to an embodiment of the present disclosure.
FIG. 1F is a flowchart of a UE operation according to an embodiment of the disclosure.
FIG. 1G is a flowchart of a previous serving base station (BS) operation according to an embodiment of the disclosure.
FIG. 1H is a flowchart of a neighboring base station operation according to an embodiment of the disclosure.
FIG. 1I is a block diagram of an internal structure of a UE according to an embodiment of the disclosure.
FIG. 1J is a block diagram of a structure of a base station according to an embodiment of the present disclosure.
FIG. 2A illustrates a structure of a next-generation mobile communication system according to an embodiment of the present disclosure.
FIG. 2B is a flowchart of a UE access stratum (AS) operation to obtain public land mobile network (PLMN) information in a long term evolution (LTE) mobile communication system, according to an embodiment of the present disclosure.
FIG. 2C is a flowchart of a UE AS operation to obtain PLMN information in a next-generation mobile communication system operating in an unlicensed frequency band, according to an embodiment of the present disclosure.
FIG. 2D is a flowchart of a PLMN selection process in a next-generation mobile communication system operating in an unlicensed frequency band, according to an embodiment of the present disclosure.
FIG. 2E is a block diagram of an internal structure of a UE according to an embodiment of the disclosure.
FIG. 2F is a block diagram of a structure of a base station according to an embodiment of the present disclosure.

### BEST MODE

According to an embodiment of the present disclosure, a method of obtaining public land mobile network (PLMN) information of a user equipment (UE) includes receiving, by a UE access stratum (AS), a request for collecting the PLMN information from a UE non-AS (NAS), scanning at least one carrier in a frequency band supportable by the UE, determining whether the at least one carrier belongs to a licensed frequency band or an unlicensed frequency band, wherein in case that the at least one carrier belongs to a licensed frequency band, the method further comprises obtaining by the UE AS, the PLMN information including a PLMN identity from a single cell having a highest signal strength, and in case that the at least one carrier belongs to an unlicensed frequency band, the method further comprises obtaining by the UE AS, the PLMN information including a plurality of PLMN identities corresponding to a plurality of cells having strongest signal strengths; and providing, by the UE AS, the obtained PLMN information to the UE NAS.

The PLMN information may include at least one of a PLMN identification (ID) list, a reference signal received power (RSRP) value measured from each of the at least one cell, an ID of the at least one cell, or information indicating whether the at least one carrier is included in an unlicensed frequency band.

In the providing, by the UE AS, of the obtained PLMN information to the UE NAS, partial PLMN information may not be provided to the UE NAS based on a predetermined PLMN list.

The providing, by the UE AS, of the obtained PLMN information to the UE NAS may include providing PLMN information of a cell having a highest signal strength among a plurality of cells providing identical PLMN information.

In the obtaining of the PLMN information from the at least one cell based on the result of the determining, PLMN information of a cell having a signal strength lower than or equal to a predetermined signal strength may not be obtained.

The method may further include selecting, by the UE NAS, one PLMN based on the obtained PLMN information and selecting one of cells providing the selected PLMN.

A UE obtaining PLMN information includes a transceiver and a controller coupled with the transceiver, in which the controller is configured to receive, by a UE access stratum (AS), a request for collecting the PLMN information from a UE non-AS (NAS), scan at least one carrier in a frequency band supportable by the UE, determine based on a result of the scanning whether the at least one carrier is a carrier in an unlicensed frequency band, obtain the PLMN information from at least one cell based on a result of the determination, and provide, by the UE AS, the obtained PLMN information to the UE NAS.

The controller may be further configured to obtain the PLMN information from a single cell having a highest signal strength when the at least one carrier belongs to a licensed frequency band.

The controller may be further configured to obtain the PLMN information from at least one cell when the at least one carrier belongs to an unlicensed frequency band.

The PLMN information may include at least one of a PLMN ID list, an RSRP value measured from each of the at least one cell, an ID of the at least one cell, or information indicating whether the at least one carrier is included in an unlicensed frequency band.

Partial PLMN information may not be provided to the UE NAS based on a predetermined PLMN list.

The controller may be further configured to provide PLMN information of a cell having a highest signal strength among a plurality of cells providing identical PLMN information.

The controller may be further configured to select, by the UE NAS, one PLMN based on the obtained PLMN information and select one of cells providing the selected PLMN.

### MODE OF DISCLOSURE

In the following description of the present disclosure, a detailed description of well-known functions or elements associated with the present disclosure will be omitted if it unnecessarily obscures the subject matter of the present disclosure. Hereinafter, embodiments of the present disclosure will be described with reference to the accompanying drawings.

Advantages and features of the disclosure and a method for achieving them will be apparent with reference to embodiments of the disclosure described below together with the attached drawings. However, the disclosure is not limited to the disclosed embodiments, but may be implemented in various manners, and the embodiments are provided to complete the disclosure of the disclosure and to allow those of ordinary skill in the art to understand the scope of the disclosure. The disclosure is defined by the category of the claims. Throughout the specification, an identical reference numeral will indicate an identical element.

It will be understood that each block of the flowchart and/or block diagram illustrations, and combinations of blocks in the flowchart and/or block diagram illustrations, may be implemented by computer program instructions. These computer program instructions may also be stored in a general-purpose computer, a special-purpose computer, or a processor of other programmable data processing devices, such that the instructions implemented by the computer or the processor of the programmable data processing device produce a means for performing functions specified in the flowchart and/or block diagram block or blocks. These computer program instructions may also be stored in a computer usable or computer-readable memory that may direct a computer or other programmable data processing apparatus to function in a particular manner, such that the instructions stored in the computer usable or computer-readable memory produce an article of manufacture including instructions that implement the function specified in the flowchart and/or block diagram block or blocks. The computer program instructions may also be loaded onto a computer or other programmable data processing apparatus to cause a series of operational steps to be performed on the computer or other programmable apparatus to produce a computer implemented process, such that the instructions that execute the computer or other programmable apparatus may provide steps for implementing the functions specified in the flowchart and/or block diagram block or blocks.

In addition, each block represents a module, segment, or portion of code, which includes one or more executable instructions for implementing the specified logical function(s). It should also be noted that in other implementations, the function(s) noted in the blocks may occur out of the order indicated. For example, two blocks shown in succession may, in fact, be executed substantially concurrently or the blocks may sometimes be executed in the reverse order, depending on the functionality involved.

The term '~unit' used herein refers to software or a hardware element such as a field-programmable gate array (FPGA), an application specific integrated circuit (ASIC), etc., and '~unit' plays specific roles. However, the meaning of '~unit' is not limited to software or hardware. '~unit' may advantageously be configured to reside on the addressable storage medium and configured to reproduce one or more processors. Thus, a unit may include, by way of example, components, such as software components, object-oriented software components, class components and task components, processes, functions, attributes, procedures, subroutines, segments of program code, drivers, firmware, microcode, circuitry, data, databases, data structures, tables, arrays, and variables. The functionality provided for in the components and '~unit(s)' may be combined into fewer components and '~unit(s)' or further separated into additional components and '~unit(s)'. In addition, components and '~unit(s)' may be implemented to execute one or more CPUs in a device or a secure multimedia card. In the embodiments, '~unit' may include one or more processors.

In the following description of the present disclosure, a detailed description of well-known functions or elements associated with the present disclosure will be omitted if it unnecessarily obscures the subject matter of the present disclosure. Hereinafter, embodiments of the present disclosure will be described with reference to the accompanying drawings.

As used in the following description, a term for identifying an access node, terms referring to network entities, terms referring to messages, a term referring to an interface between network objects, and terms referring to various identification information are illustrated for convenience of explanation. Therefore, the disclosure is not limited by the following terms, and other terms indicating targets having equivalent technical meanings may be used.

Hereinbelow, for convenience of a description, the present disclosure employs terms and names defined in the 3rd-Generation Partnership Project Long Term Evolution (3GPP LTE) standards. However, the disclosure is not limited by such terms and names, and may be equally applied to systems complying with other standards. In the present disclosure, an evolved NodeB (eNB) may be used interchangeably with a next generation node B (gNB). That is, a base station (BS) described as the eNB may indicate the gNB. A term 'terminal' may indicate not only a cellular phone, NB-Internet of Things (IoT), and sensors, but also other wireless communication devices.

Hereinbelow, the base station is an entity that performs resource assignment of the terminal, and may be at least one of gNode B(gNB), eNode B(eNB), Node B, a wireless access unit, a base station controller, or a node on a network. The terminal may include a UE, a mobile station (MS), a cellular phone, a smartphone, a computer, or a multimedia system capable of performing communication functions. Needless to say, the disclosure is not limited to the example.

In particular, the present disclosure may be applied to the 3GPP New Radio (NR) (5^{th}-generation mobile communication standards). The present disclosure can be applied to smart services (e.g. smart homes, smart buildings, smart cities, smart cars or connected cars, health care, digital education, retail businesses, security- and safety-related services and the like) on the basis of 5G communication technology and loT-related technology. In the present disclosure, the eNB may be used interchangeably with the gNB. That is, a base station described as the eNB may indicate the gNB. The term 'terminal' may indicate not only a cellular phone, NB-IoT, and sensors, but also other wireless communication devices.

A wireless communication system has evolved from an initial one that provides a voice-oriented service to a broadband wireless communication system that provides a high-speed and high-quality packet data service, like the communication standards, such as 3GPP high speed packet access (HSPA), LTE or Evolved Universal Terrestrial Radio Access (E-UTRA), LTE-Advanced (LTE-A), LTE-Pro, 3GPP2 high rate packet data (HRPD), Ultra Mobile Broadband (UMB), the Institute of Electrical and Electronics Engineers (IEEE) 802.16e, etc.

In an LTE system as a representative example of a broadband wireless communication system, orthogonal frequency division multiplexing (OFDM) is employed in a downlink (DL) and single carrier frequency division multiple access (SC-FDMA) is employed in an uplink (UL). The UL means a radio link through which a UE transmits data or a control signal to a base station (eNodeB or BS), and the DL means a radio link through which the base station transmits data or a control signal to the UE. The above-described multiple access scheme identifies data or control information for each user by allocating and operating time-frequency resources on which the data or the control information is carried for each user, so that the time-frequency resources do not overlap each other, that is, so that orthogonality is realized.

A 5G communication system, that is, a post-LTE communication system, needs to freely reflect various requirements from a user and a service provider, such that a service satisfying the various requirements at the same time has to be supported. Services taken into consideration for the 5G communication system may include enhanced mobile broadband (eMBB) communication, massive machine type communication (mMTC), ultra reliability low latency communication (URLLC), etc.

According to an embodiment, the eMBB may aim to provide a further enhanced data transmission speed than a data transmission speed supported by existing LTE, LTE-A, or LTE-Pro. For example, in the 5G communication system, with respect to one BS, the eMBB needs to provide a peak data rate of 20 Gbps in the DL and a peak data rate of 10 Gbps in the UL. Furthermore, the 5G communication system should be able to provide an increased user-perceived data rate while providing the peak data rate. In order to satisfy such a requirement, various transmission and reception technologies including a further enhanced MIMO transmission technology must be improved. Moreover, the LTE system transmits a signal using a 20 MHz maximum transmission bandwidth in the 2 GHz band, whereas the 5G communication system transmits a signal using a frequency bandwidth wider than 20 MHz in a frequency band of 3 to 6 GHz or more, thus satisfying the data rates required for the 5G communication system.

In the 5G communication system, mMTC is taken into consideration in order to support application services, such as IoT. Access by many UEs within a single cell, coverage improvement of a UE, an increased battery time, a reduction in the cost of a UE are required in order for mMTC to efficiently provide for the IoT. The IoT is attached to various sensors and various devices to provide a communication function, and thus should be able to support many UEs (e.g., 1,000,000 UEs/km²) within a cell. Furthermore, a UE supporting mMTC requires wider coverage compared to other services provided by the 5G communication system because there is a high possibility that the UE may be located in a shadow area not covered by a cell, such as the underground of a building. A UE supporting mMTC needs to be a cheap UE, and requires a very long battery life time, such as 10 to 15 years, because it is difficult to frequently replace the battery of the UE.

Last, URLLC is a mission-critical cellular-based wireless communication service, and may be used for services used for remote control of robots or machinery, industrial automation, unmanned aerial vehicles, remote health care, emergency alert, etc. Accordingly, communication provided by URLLC should be low latency (super low latency) and high reliability (super high reliability). For example, services supporting URLLC may require air interface latency to be less than 0.5 millisecond and may also require a packet error rate of 10⁻⁵ or less. Accordingly, for services supporting URLLC, the 5G system needs to provide a transmission time interval (TTI) less than that of other services, and also requires the design for allocating resources in a wide frequency band in order to secure reliability of a communication link.

The above-described three services considered in the 5G system, that are, the eMBB, the URLLC, and the mMTC, may be multiplexed and transmitted in one system. In order to satisfy different requirements of the services, different transmission and reception schemes and parameters may be used between the services. However, the above-described mMTC, URLLC, and eMBB are merely examples of different service types, and a service type to which the present disclosure is applied is not limited to the foregoing examples.

While embodiments of the present disclosure are described by using an LTE, LTE-A, LTE Pro, or 5G (NR, next-generation mobile communication) system as an example, the embodiments of the disclosure may also be applied to other communication systems having a similar technical background or channel form. Also, the embodiments of the present disclosure may also be applied to other communication systems through some modifications within a range that does not largely depart from the scope of the disclosure based on determination of a skilled person.

The present disclosure relates to a next-generation wireless communication system, and more particularly, to a method and apparatus for supporting mobility in a next-generation mobile communication system operating in an unlicensed frequency band. The present disclosure also provides a method and apparatus for obtaining PLMN information in a next-generation mobile communication system operating in an unlicensed frequency band.

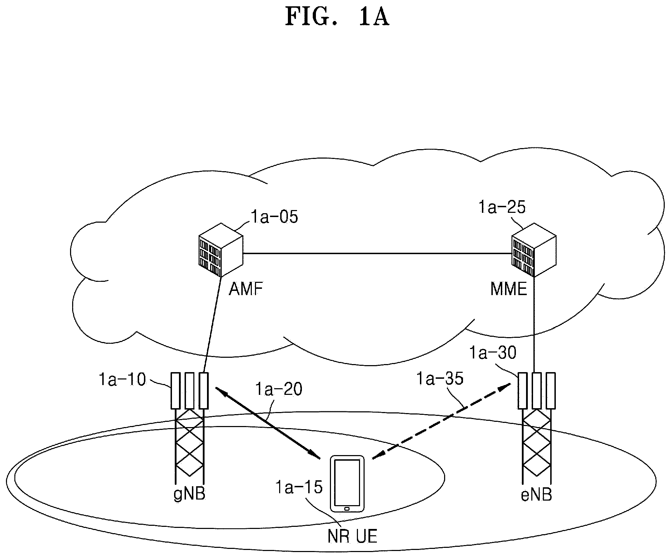

FIG. 1A illustrates a structure of a next-generation mobile communication system according to an embodiment of the present disclosure.

Referring to FIG. 1A, as is shown, a radio access network of a next-generation communication system (e.g., NR communication system) may include a next-generation base station (NR Node B, which will be hereinafter referred to as a gNB) 1a-10 and an NR core network, in which the NR core network may include, but not limited to, an access management function (AMF) 1a-05. An NR UE or UE 1a-15 may access an external network through the gNB 1a-10 and the AMF 1a-05.

In FIG. 1A, the gNB 1a-10 may correspond to an eNB of an existing LTE system. The gNB 1a-10 may be connected to the NR UE 1a-15 over a radio channel and may provide a more advanced service than that of the existing Node B, as indicated by 1a-20. In the next-generation mobile communication system, all user traffic is served through a shared channel, requiring a device that collects state information, such as UEs' buffer status, available transmission power state, and channel state, and performs scheduling, in which the gNB 1a-10 may be responsible for these functions. One gNB may generally control a plurality of cells. In order to realize ultra high-speed data transmission compared to an LTE system, the next-generation mobile communication system (5G or NR system) may have a maximum bandwidth greater than the existing maximum bandwidth and may employ a beamforming technique in addition to OFDM as a radio access technology.

Also, according to an embodiment, the NR gNB 1a-10 may apply adaptive modulation & coding (AMC) in which a modulation scheme and a channel coding rate are determined based on a channel state of a UE.

According to an embodiment, the AMF 1a-05 may perform functions such as mobility support, bearer setup, quality of service (QoS) setup, etc. The AMF 1a-05 is in charge of various control functions as well as a mobility management function for the UE, and may be connected with the plurality of BSs. The next-generation mobile communication system may also interwork with the existing LTE system, in which the AMF 1a-05 may be connected to an MME 1a-25 through a network interface. The MME 1a-25 may be connected with an eNB 1a-30 that is an existing BS. The UE supporting LTE-NR dual connectivity may transmit and receive data, while maintaining connection with the eNB 1a-30 as well as the gNB 1a-10, as indicated by 1a-35.

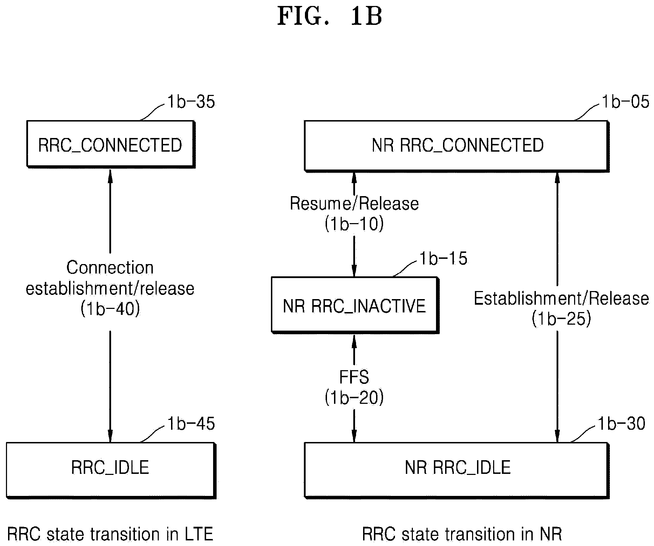

FIG. 1B is a diagram for describing transition to a radio access state in a next-generation mobile communication system according to an embodiment of the present disclosure.

The LTE system may have two wireless connection states of a connected mode 1b-35 and an idle mode 1b-45. The connected mode 1b-35 and the idle mode 1b-45 may switch through an establishment process and a release process in operation 1b-40. On the other hand, the next-generation mobile communication system may have three wireless connection (radio resource control (RRC)) states. A connected mode (RRC_CONNECTED) 1b-05 is a wireless connection state in which a UE may transmit and receive data. An idle mode (RRC_IDLE) 1b-30 is a wireless connection state in which a UE may monitor whether paging is transmitted to the UE. The connected mode 1b-05 and the idle mode 1b-30 are wireless connection states applied to the existing LTE system, and detailed descriptions thereof are the same as those of the existing LTE system. In the next-generation mobile communication system, a new wireless connection state, i.e., an inactive mode (RRC_INACTIVE) 1b-15 is defined. In the inactive mode 1b-15, a UE context is maintained in the base station and the UE and RAN-based paging is supported. The new wireless connection state has characteristics described below.
- Cell re-selection mobility;
- CN - NR RAN connection (both C/U-planes) has been established for UE;
- The UE AS context is stored in at least one gNB and the UE;
- Paging is initiated by NR RAN;
- RAN-based notification area is managed by NR RAN; and
- NR RAN knows the RAN-based notification area which the UE belongs to.

Among the above-described characteristics, the RAN-based notification area includes one or more cells, in which RAN paging is transmitted for a particular UE. Thus, when a RAN area is changed during movement of the UE, the UE has to report the change of the RAN area to the base station. An operation, performed by the UE, of reporting the change of the RAN area to the base station is referred to as RAN notification area (RNA) update. The RNA update may be performed when the UE moves to a cell belonging to another RAN area, or periodically. When the RAN update is performed periodically, it is referred to as periodic RNA update. Due to mobility of the UE, a cell triggering the periodic RNA update and a cell receiving a report for the periodic RNA update may be different. Thus, the cell receiving the report for the periodic RNA update may forward the periodic RNA update to the cell triggering the periodic RNA update. Generally, the cell triggering the periodic RNA update may have the UE context of the UE, and the cell receiving the report for the periodic RNA update may deliver the periodic RNA update to the cell having forwarded the UE context.

According to an embodiment, the new inactive mode may switch to the connected mode or the idle mode by using a particular procedure. A transition from the inactive mode to the connected mode is performed according to the RRC resume procedure, and a transition from the connected mode to the inactive mode is performed by using the RRC release procedure, as indicated by 1b-10. In the RRC resume/release procedure, one or more RRC messages may be transmitted and received between the UE and the base station, and one or more steps may be provided. According to a specific procedure, a transition from the inactive mode to the idle mode is possible, as indicated by 1b-20. An example of the specific procedure may be a message exchange-based, timer-based, or event-based method. A transition between the connected mode and the idle mode may follow the existing LTE technology. That is, through the connection establishment or release procedure, the transition between modes may be performed, as indicated by 1b-25.

In a next-generation mobile communication system, an NR-unlicensed (NR-U) technology capable of a data communication service using an unlicensed frequency band has been developed. The unlicensed frequency band has already been used by other wireless communication systems such as WiFi, etc., and may be shared by a communication operator with other next-generation mobile communication systems. To efficiently share the unlicensed frequency band for use between different wireless communication systems or next-generation mobile communication systems managed by different operators, a listen-before-talk (LBT) process is needed. The LBT process is a process of determining whether an unlicensed frequency band is used by another user before using the unlicensed frequency band and obtaining an opportunity to use the unlicensed frequency band through contention. Thus, when the unlicensed frequency band is used, an opportunity for a UE or a base station to transmit and receive data is not guaranteed at all times like in a licensed band.

In the present disclosure, an LBT failure refers to a failure in finally obtaining an opportunity to transmit and receive data during a particular time period in the LBT process. The LBT operation may be performed by both the base station and the UE. For example, the base station may perform the LBT operation to transmit data in the DL. The UE may perform the LBT operation to transmit data in the UL. The unguaranteed opportunity to transmit and receive data may require an additional operation from an existing mobile communication system.

To solve a mobility problem likely to occur in case of an LBT failure, the present disclosure proposes an improved resume process. In the present disclosure, the proposed resume process will be referred to as a conditional resume process.

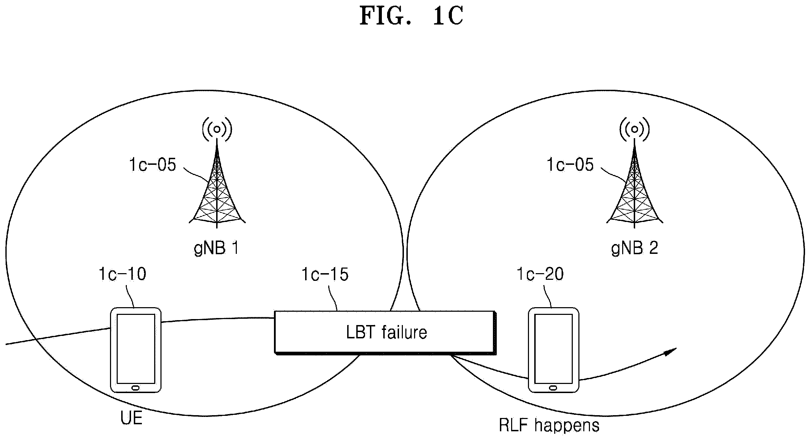

FIG. 1C is a diagram for describing a scenario where a handover fails due to an LBT failure in a next-generation mobile communication system operating in an unlicensed frequency band, according to an embodiment of the present disclosure.

In NR-U (New Radio-Unlicensed), a late handover may frequently occur. The late handover refers to a failure in a handover because a UE 1c-10 misses an optimal handover time. For example, a base station(gNB 1) 1c-05 may not broadcast synchronization signal block (SSB) transmission during a particular time due to an LBT failure 1c-15. The SSB may be used for the UE 1c-10 to measure a received signal strength from a corresponding base station, and due to an LBT failure, the base station may not be able to deliver a handover command to a particular UE.

According to an embodiment, the UE 1c-10 may not be able to report a measurement report to the base station at a proper time due to the LBT failure 1c-15. The measurement report may be used for the base station to determine the proper time for the handover. As a result, data transmission/reception impossibility or delay in UL/DL due to the LBT failure may disturb a handover being performed at a proper time. Thus, the UE 1c-20 having moved to a region of another neighboring base station (gNB 2) 1c-25 without a proper handover procedure declares a radio link failure (RLF). A particular time is required until RLF declaration, and even after RLF declaration, much time may be required, for example, for cell selection, reestablishment, re-connection, etc., until the UE 1c-20 restarts data transmission and reception in the connected mode.

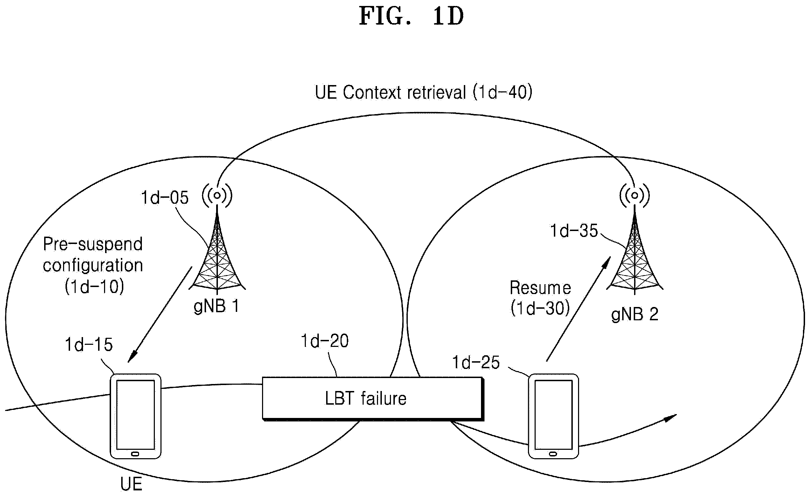

FIG. 1D is a diagram for describing a UE operation to perform a resume process based on a condition according to an embodiment of the present disclosure.

The present disclosure proposes a method in which a UE may fast return to a connected mode in a new base station while preventing an RLF from occurring due to a handover failure like in the above-described scenario. In the present disclosure, a previous base station (gNB 1) 1d-05 provides a connected-mode UE 1d-15 with suspend configuration information that is configuration information required for the resume process, and a condition for self-triggering the resume process by the UE 1d-15 in a neighboring cell, through an RRC message 1d-10 except for an RRCRelease message. When the condition is satisfied, a UE 1d-25 having experienced an LBT failure 1d-20 may self-trigger a resume process 1d-30 in a neighboring base station (gNB 2) 1d-35 by using the provided suspend configuration. The neighboring base station 1d-35 may retrieve a UE context from the previous base station 1d-05, as indicated by 1d-40.

According to an existing technology, when a base station switches a UE in a connected mode to an inactive mode (RRC_Inactive), the base station transmits suspend configuration information to the UE through an RRCRelease message. The UE having received the RRCRelease message including the suspend configuration information directly switches to the inactive mode. On the other hand, in the present disclosure, the UE having received an RRC message including the suspend configuration information does not directly switch to the inactive mode; instead, when a predetermined condition is satisfied, the UE may switch to the inactive mode and then trigger the resume process. For example, the RRC message may be an RRCReconfiguration message. The RRC message may carry the following configuration information, without being limited thereto, for a conditional resume operation in the present disclosure:
suspend configuration;
predetermined condition for triggering a resume process in a neighboring cell; and
set values related to the condition.

In the present disclosure, the configuration information for the conditional resume operation will be referred to as pre-suspend configuration information. According to an embodiment, the pre-suspend configuration information may include a full-radio network temporary identifier (RNTI), a shortI-RNTI, and nextHopChainingCount. The full-RNTI or the shortI-RNTI may be carried in an RRCResumeRequest message transmitted by a UE in another neighboring base station or cell, and may be used by another neighboring base station or cell to a UE context of the UE from a previous serving base station. The full-RNTI or the shortl-RNTI may be configured according to a rule by using identification (ID) information of the previous serving base station having the UE context of the UE and ID information of the UE. Thus, another neighboring base station or cell may identify the previous serving base station by using the ID information of the previous serving base station and request the UE context of the UE. nextHopChainingCount, which is a security-related parameter, matches a normalized cross correlation (NCC) value described in the TS33.501 standards document. The existing suspend configuration information may include parameters for RNA update. For example, the suspend configuration information may include, but not limited to, ran-PagingCycle (UE specific cycle for RAN-initiated paging) and ran-NotifiationArealnfo (a cell list included in a RAN area and RAN area code) information. In the present disclosure, when a condition is satisfied, the UE triggers the resume process in the neighboring base station or cell; and thus does not need to perform RNA update. Thus, in the present disclosure, the suspend configuration information does not need to carry parameters related to RAN update.

The RRC message may include the set condition for self-triggering the resume process by the UE in the neighboring cell. One or more conditions may be set. When the condition is satisfied, the UE may trigger the resume process to the neighboring base station or cell meeting the condition. For example, the condition for self-triggering the resume process by the UE in the neighboring cell may be as follows:
when a signal strength of the neighboring base station or cell is equal to or greater than a predetermined value;
when a signal strength of the neighboring base station or cell is greater than that of a current serving base station or cell by an offset
(the offset is a predetermined value greater than or equal to 0);
when a signal strength of the neighboring base station or cell is equal to or greater than a predetermined value and a signal strength of a current serving base station or cell is less than or equal to a predetermined value; or
when a signal strength of the neighboring base station or cell is equal to or greater than a predetermined value and an LBT failure occurs in communication with a current serving gNB during a particular time period.

The values in the above-described condition may be carried together with the condition in the RRC message, and separate values may be set for each cell re-selection priority.

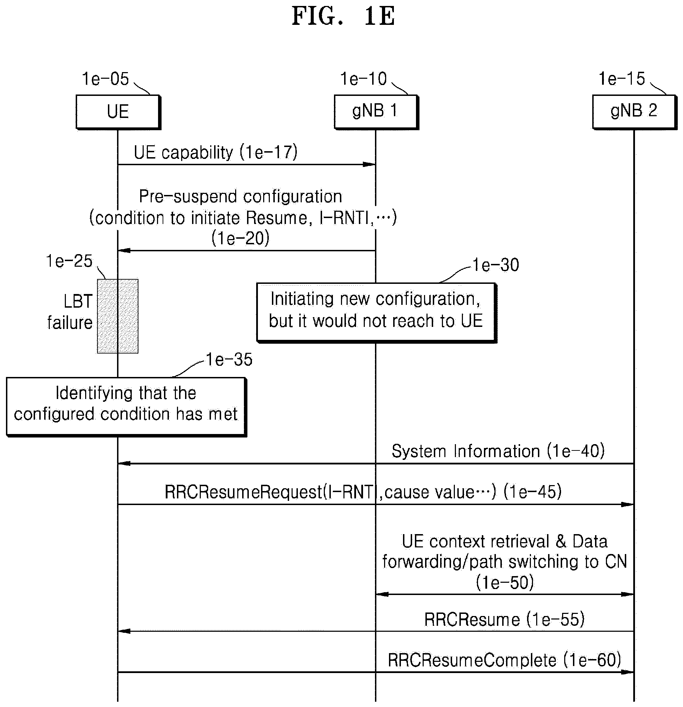

FIG. 1E is a flowchart of a UE operation to perform a resume process based on a condition according to an embodiment of the present disclosure.

A UE 1e-05 may report a 1-bit indicator indicating whether the UE 1e-05 supports the conditional resume operation to a current serving base station(gNB 1) 1e-10 in operation 1e-17. The UE 1e-05 may receive pre-suspend configuration information carried in an RRC message from the current serving base station(or cell)(gNB 1) 1e-10 in operation 1e-20. The pre-suspend configuration information has already been described above and thus will not be described at this time.

The UE 1e-05 having received the pre-suspend configuration information may determine whether conditions included in the pre-suspend configuration information are satisfied. The serving base station 1e-10 and the UE may not smoothly transmit or receive data due to an LBT failure 1e-25 occurring in a DL. For example, even when the serving base station 1e-10 triggers handover configuration information, etc., it may not be successfully transmitted to the UE 1e-05 in operation 1e-30.

The UE 1e-05 may identify that at least one of one or more conditions indicated in the pre-suspend configuration information is satisfied, in operation 1e-35. That is, the UE may determine or identify whether at least one of the one or more conditions indicated in the pre-suspend configuration information is satisfied.

The UE 1e-05 may receive system information provided from a neighboring base station(gNB 2) 1e-15 (or cell) satisfying the condition in operation 1e-40. The system information may include an indicator indicating whether the neighboring base station 1e-15 supports the conditional resume operation. When the neighboring base station 1e-15 supports the conditional resume operation, the UE 1e-05 may transmit an RRCResumeRequest message to the neighboring base station 1e-15 in operation 1e-45. The RRCResumeRequest message may include shortI-RNTI (or fullI-RNTI), resumeMAC-I, and resumeCause. In particular, resumeCause may include a new cause value indicating that the resume process has been triggered due to the conditional resume operation. The new resume cause value may be used to trigger an operation that has to be additionally performed in the neighboring base station 1e-15 due to the conditional resume operation, such as data forwarding, path switching, etc.

According to an embodiment of the present disclosure, the neighboring base station 1e-15 may refer to a base station located in a specific range from the UE 1e-05 or a base station located in a specific range from a current base station, without being limited to the above-described examples.

According to an embodiment of the present disclosure, msg3 carrying the RRCResumeRequest message may not be able to define the new cause value due to a size limitation. That is, to indicate more types of cause value, more bits may be required. In this case, a particular one of existing cause values may be used. For example, the UE may determine the cause value according to a service provided from the previous serving base station. When the UE has been provided with a high priority access service, the UE may set the cause value to highPriorityAccess. The UE may set the cause value to mo-VoiceCall for a UE-triggered voice call, to emergency for an emergency service, and to mps-PriorityAcess for a Multimedia Priority Service(MPS)
According to an embodiment of the present disclosure, when the new cause value is not defined in the RRCResumeRequest message due to a size limitation, an indicator indicating the resume process triggered by the conditional resume operation may be included in an RRCResumeComplete message. The new cause value or the new indicator in the RRCResumeComplete message may be used to trigger an operation that has to be additionally performed in the neighboring base station 1e-15 due to the conditional resume operation, such as data forwarding, path switching, etc.

The neighboring base station 1e-15 having received the RRCResumeRequest message may identify the previous serving base station 1e-10 by using inactive (I)-RNTI information, and retrieve UE context information regarding the UE 1e-05 from the previous serving base station 1e-10. The neighboring base station 1e-15 may perform data forwarding/path switching together with the previous serving base station 1e-10 in operation 1e-50. In spite of the data transmission/reception delay problem in the conditional resume process, the UE 1e-05 may desire to be continuously provided with a service having been provided from the previous serving base station 1e-10. Thus, data forwarding and path switching may be required. The previous serving base station1e-10 may forward data that has not been successfully transmitted to the UE 1e-05 to the neighboring base station 1e-15, and the neighboring base station 1e-15 may switch a path with a gateway to the neighboring base station 1e-15. The previous serving base station 1e-10 having received a UE context request from the neighboring base station 1e-15 may regard the UE 1e-05 as leaving a serving area of the neighboring base station 1e-15 and release the UE 1e-05. Thus, in the conditional resume process, the UE may be released without an RRCRelease message.

The neighboring base station 1e-15 having received the RRCResumeRequest message may transmit an RRCResume message to the UE 1e-05 in operation 1e-55. In response to the RRCResume message, the UE 1e-05 may transmit an RRCResumeComplete message to the neighboring base station 1e-15 in operation 1e-60.

The neighboring base station 1e-15 may transmit an RRCSetup message, an RRCRelease message, an RRCRelease with suspend configuration message, or an RRCReject message, instead of the RRCResume message, according to its intention. RRCSetup may be used to provide the UE 1e-05 with a service through new configuration information, RRCRelease and RRCRelease with suspend configuration may be used to switch the UE 1e-05 to an idle mode and an inactive mode with new suspend configuration information, respectively, and RRCReject may be used to reject a connection attempt during a specific time period.

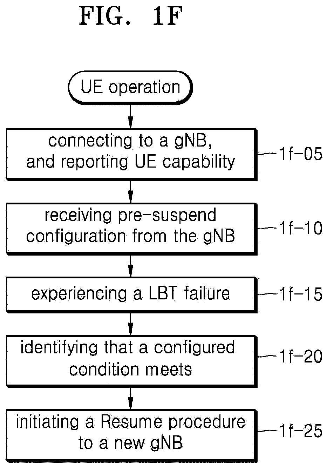

FIG. 1F is a flowchart of a UE operation according to an embodiment of the disclosure.

In operation 1f-05, the UE may be connected with one base station (gNB). The UE reports whether the UE supports the conditional resume operation to the serving base station.

In operation 1f-10, the UE may receive pre-suspend configuration information from the base station and store the received pre-suspend configuration information. The UE may monitor from when receiving the pre-suspend configuration information whether a condition included in the pre-suspend configuration information is satisfied. The pre-suspend configuration information includes suspend configuration information, but the UE may not switch to the inactive mode.

In operation 1f-15, the UE may experience an LBT failure.

In operation 1f-20, the UE may recognize that at least one of conditions included in the pre-suspend configuration information is satisfied.

In operation 1f-25, the UE performs the resume process with respect to a neighboring base station that satisfies the condition included in the pre-suspend configuration information.

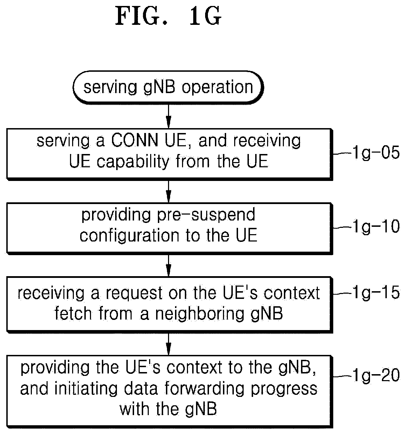

FIG. 1G is a flowchart of a previous serving base station operation according to an embodiment of the disclosure.

In operation 1g-05, the base station may provide a data service to one connected-mode UE. The base station may receive from the UE, a report regarding whether the UE supports the conditional resume operation.

In operation 1g-10, the base station may provide pre-suspend configuration information to the UE.

In operation 1g-15, the base station may receive a request for a UE context regarding the UE from a neighboring base station.

In operation 1g-20, the base station may report the requested UE context to the neighboring base station and when the UE is a UE having provided the pre-suspend configuration information, the base station performs data forwarding.

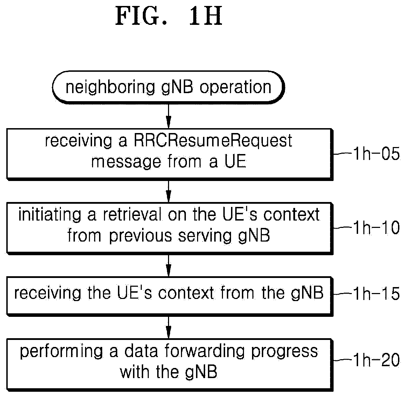

FIG. 1H is a flowchart of a neighboring base station operation according to an embodiment of the disclosure.

In operation 1h-05, the base station(gNB) receives the RRCResumeRequest message from a particular UE. The RRCResumeRequest message may include a cause value indicating the conditional resume operation. When a corresponding cause value is included, the base station has to additionally perform data forwarding and path switching.

In operation 1h-10, the base station may identify a neighboring base station having a UE context of the UE and transmits a request for the UE context to the base station. The neighboring base station may be a previous serving base station of the UE.

In operation 1h-15, the base station may receive a UE context from a neighboring base station.

In operation 1h-20, the base station may transmit a request for switching a path to the neighboring base station to the base station to a gateway to switch the path. This operation is intended to provide a continuous service.

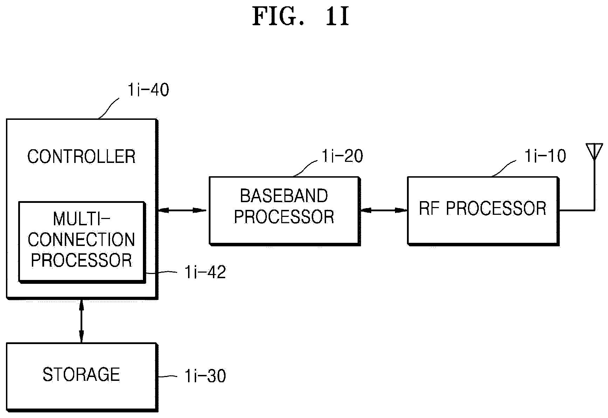

FIG. 1I is a block diagram of a structure of a UE according to an embodiment of the disclosure.

Referring to FIG. 1I, the UE may include a radio frequency (RF) processor 1i-10, a baseband processor 1i-20, a storage 1i-30, and a controller 1i-40. Needless to say, the present disclosure is not limited to the foregoing example, and the UE may include components that are more or less than those illustrated in FIG. 1I.

The RF processor 1i-10 may perform functions for transmitting and receiving a signal through a wireless channel, as the functions including band translation, amplification, and so forth. That is, the RF processor 1i-10 may up-convert a baseband signal provided from the baseband processor 1i-20 into an RF band signal, transmit the RF band signal through an antenna, and down-convert an RF band signal received through the antenna into a baseband signal. For example, the RF processor 1i-10 may include a transmission filter, a reception filter, an amplifier, a mixer, an oscillator, a digital-to-analog converter (DAC), an analog-to-digital converter (ADC), and so forth. Needless to say, the disclosure is not limited to the example. Although one antenna is illustrated in FIG. 1I, the UE may also include a plurality of antennas. The RF processor 1i-10 may include a plurality of RF chains. The RF processor 1i-10 may perform beamforming. For the beamforming, the RF processor 1i-10 may adjust phases and magnitudes of respective signals transmitted and received through a plurality of antennas or antenna elements. The RF processor may also perform MIMO and may receive several layers when performing MIMO operations.

The baseband processor 1i-20 may perform conversion between a baseband signal and a bitstream according to physical layer standards of a system. For example, in data transmission, the baseband processor 1i-20 may generate complex symbols by encoding and modulating a transmission bitstream. In data reception, the baseband processor 1i-20 may reconstruct a received bitstream by demodulating and decoding the baseband signal provided from the RF processor 1i-10. For example, when orthogonal frequency division multiplexing (OFDM) is used, in data transmission, the baseband processor 1i-20 may generate complex symbols by encoding and modulating a transmission bitstream, map the complex symbols to subcarriers, and configure OFDM symbols through inverse fast Fourier transform (IFFT) and cyclic prefix (CP) insertion. Also, in data reception, the baseband processor 1i-20 divides the baseband signal provided from the RF processor 1i-10 in the unit of an OFDM symbol, reconstructs the signals mapped to the subcarriers through FFT, and reconstructs the received bitstream through demodulation and decoding.

The baseband processor 1i-20 and the RF processor 1i-10 may transmit and receive a signal as described above. Thus, the baseband processor 1i-20 and the RF processor 1i-10 may also be called a transmitter, a receiver, a transceiver, or a communicator. Moreover, at least one of the baseband processor 1i-20 and the RF processor 1i-10 may include a plurality of communication modules for supporting a plurality of different radio access technologies. In addition, at least one of the baseband processor 1i-20 and the RF processor 1i-10 may include multiple communication modules for processing signals in different frequency bands. For example, the different radio access technologies may include a wireless LAN (e.g., IEEE 802.11), a cellular network (e.g., LTE), and the like. In addition, the different frequency bands may include a super high frequency (SHF, e.g., 2.NRHz, NRhz) band, and a millimeter wave (mm-wave, e.g., 60 GHz) band. The UE may transmit and receive a signal to and from a base station by using the baseband processor 1i-20 and the RF processor 1i-10, in which the signal may include control information and data.

The storage 1i-30 may store data such as a basic program for operations of the UE, an application program, configuration information, and so forth. In particular, the storage 1i -30 may store information related to a second connection node for performing wireless communication by using a second wireless connection technique. The storage 1i-30 provides the stored data at the request of the controller 1i-40. The storage 1i-30 may include a storage medium such as read only memory (ROM), random access memory (RAM), hard-disk, compact disc (CD)-ROM, digital versatile disc (DVD), etc., or a combination thereof. The storage 1i-30 may also include a plurality of memories. According to an embodiment, the storage 1i-30 may store a program for executing a method of performing Resume based on a condition according to the present disclosure.

The controller 1i-40 controls overall operations of the UE. For example, the controller 1i-40 may transmit and receive a signal through the baseband processor 1i-20 and the RF processor 1i-10. The controller 1i-40 may record and read data from and in the storage 1i-30. To this end, the controller 1i-40 may include at least one processor. For example, the controller 1i-40 may include a communication processor (CP) for performing control for communication and an application processor (AP) for controlling a higher layer such as an application program. At least one component of the UE may be implemented with one chip.

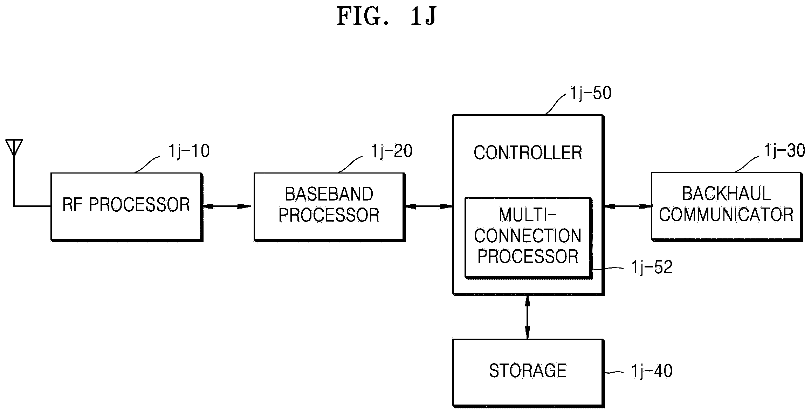

FIG. 1J is a block diagram of a main base station in a wireless communication system according to an embodiment of the present disclosure.

Referring to FIG. 1J, the base station may include an RF processor 1j-10, a baseband processor 1j-20, a backhaul communicator 1j-30, a storage 1j-40, and a controller 1j-50. Needless to say, the present disclosure is not limited to the foregoing example, and the UE may include components that are more or less than those illustrated in FIG. 1J. The RF processor 1j-10 may perform functions for transmitting and receiving a signal through a wireless channel, as the functions including band translation, amplification, and so forth. That is, the RF processor 1j-10 may up-convert a baseband signal provided from the baseband processor 1j-20 into an RF band signal, transmit the RF band signal through an antenna, and down-convert an RF band signal received through the antenna into a baseband signal. For example, the RF processor 1j-10 may include a transmission filter, a reception filter, an amplifier, a mixer, an oscillator, a DAC, an ADC, and so forth. Although one antenna is illustrated in FIG. 1J, the RF processor 1j-10 may also include a plurality of antennas. The RF processor 1j-10 may include a plurality of RF chains. The RF processor 1j-10 may perform beamforming. For the beamforming, the RF processor 1j-10 may adjust phases and magnitudes of respective signals transmitted and received through multiple antennas or antenna elements. The RF processor 1j-10 may perform downward MIMO operations by transmitting one or more layers.

The baseband processor 1j-20 may perform conversion between a baseband signal and a bitstream according to physical layer standards of the first wireless connection technique. For example, in data transmission, the baseband processor 1j-20 may generate complex symbols by encoding and modulating a transmission bitstream. In data reception, the baseband processor 1j-20 may reconstruct a received bitstream by demodulating and decoding the baseband signal provided from the RF processor 1j-10. For example, when OFDM is used, in data transmission, the baseband processor 1j-20 may generate complex symbols by encoding and modulating a transmission bitstream, map the complex symbols to subcarriers, and configure OFDM symbols through IFFT and CP insertion. Also, in data reception, the baseband processor 1j-20 divides the baseband signal provided from the RF processor 1j-10 in the unit of an OFDM symbol, reconstructs the signals mapped to the subcarriers through FFT, and reconstructs the received bitstream through demodulation and decoding. The baseband processor 1j-20 and the RF processor 1j-10 may transmit and receive a signal as described above. Thus, the baseband processor 1j-20 and the RF processor 1j-10 may also be called a transmitter, a receiver, a transceiver, a communicator, or a wireless communicator. The base station may transmit and receive a signal to and from a UE by using the baseband processor 1j-20 and the RF processor 1j-10, in which the signal may include control information and data.

The backhaul communicator 1j-30 may provide an interface for performing communication with other nodes in a network. That is, the backhaul communicator 1j-30 may convert a bitstream transmitted to another node, e.g., an auxiliary base station, a core network, etc., into a physical signal, and convert a physical signal received from another node into a bitstream. The backhaul communicator 1j-30 may be included in a communicator.

The storage 1j-40 may store data such as a basic program for operations of the main base station, an application program, configuration information, and so forth. In particular, the storage 1j-40 may store information about a bearer allocated to the connected UE, and a measurement result reported from the connected UE. The storage 1j-40 may store information that is a criterion for determining whether to provide or stop multiple connections to the UE. The storage 1j-40 may provide the stored data at the request of the controller 1j-50. The storage 1j-40 may include a storage medium such as read only memory (ROM), random access memory (RAM), hard-disk, compact disc (CD)-ROM, digital versatile disc (DVD), etc., or a combination thereof. The storage 1j-40 may also include a plurality of memories. According to an embodiment, the storage 1j-40 may store a program for executing a method of performing Resume based on a condition according to the present disclosure.

The controller 1j-50 may control overall operations of the main base station. For example, the controller 1j-50 may transmit and receive a signal through the baseband processor 1j-20 and the RF processor 1j-10 or through the backhaul communicator 1j-30. The controller 1j-50 may record and read data from and in the storage 1j-40. To this end, the controller 1j-50 may include at least one processor.

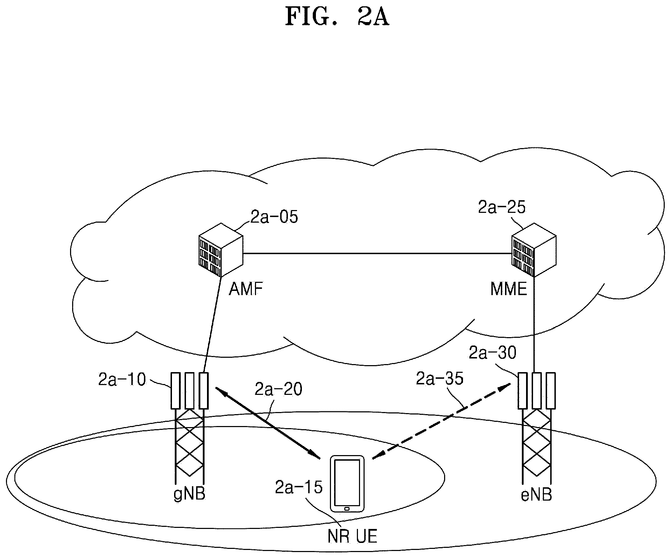

FIG. 2A illustrates a structure of a next-generation mobile communication system according to an embodiment of the present disclosure.

Referring to FIG. 2A, as is shown, a radio access network of a next-generation communication system (e.g., NR communication system) may include a next-generation base station (NR Node B, which will be hereinafter referred to as a gNB) 2a-10 and an NR core network, in which the NR core network may include, but not limited to, an access management function (AMF) 2a-05. An NR UE or UE 2a-15 may access an external network through the gNB 2a-10 and the AMF 2a-05.

In FIG. 2A, the gNB 2a-10 may correspond to an eNB of an existing LTE system. The gNB 2a-10 may be connected to the NR UE 2a-15 over a radio channel and may provide a more advanced service than that of the existing Node B, as indicated by 2a-20. In the next-generation mobile communication system, all user traffic is served through a shared channel, requiring a device that collects state information, such as UEs' buffer status, available transmission power state, and channel state, and performs scheduling, in which the gNB 2a-10 may be responsible for these functions. One gNB may generally control a plurality of cells. In order to realize ultra high-speed data transmission compared to an LTE system, the next-generation mobile communication system (5G or NR system) may have a maximum bandwidth greater than the existing maximum bandwidth and may employ a beamforming technique in addition to OFDM as a radio access technology.

Also, according to an embodiment, the NR gNB 2a-10 may apply adaptive modulation & coding (AMC) in which a modulation scheme and a channel coding rate are determined based on a channel state of a UE.

According to an embodiment, the AMF 2a-05 may perform functions such as mobility support, bearer setup, quality of service (QoS) setup, etc. The AMF 2a-05 is in charge of various control functions as well as a mobility management function for the UE, and may be connected with the plurality of BSs. The next-generation mobile communication system may also interwork with the existing LTE system, in which the AMF 2a-05 may be connected to an MME 2a-25 through a network interface. The MME 2a-25 may be connected to an eNB 2a-30, which is an existing base station. The UE supporting LTE-NR dual connectivity may transmit and receive data, while maintaining connection with the gNB 2a-30 as well as the gNB 2a-10, as indicated by 2a-35.

In a next-generation mobile communication system, an NR-U) technology capable of a data communication service using an unlicensed frequency band has been developed. The unlicensed frequency band has already been used by other wireless communication systems such as WiFi, etc., and may be shared by a communication operator with other next-generation mobile communication systems. To efficiently share the unlicensed frequency band for use between different wireless communication systems or next-generation mobile communication systems managed by different operators, an LBT process is needed. The LBT process is a process of determining whether an unlicensed frequency band is used by another user before using the unlicensed frequency band and obtaining an opportunity to use the unlicensed frequency band through contention. Thus, like in the licensed frequency band, an opportunity to transmit and receive data is not guaranteed at all times.

On the other hand, in the unlicensed frequency band, a radio resource is shared in a time-division multiplexing (TDM) manner, such that a mobile communication system that does not provide the strongest or highest signal strength may provide a service. The present disclosure provides a method of effectively obtaining public land mobile networking (PLMN) information from cells during an operation in the unlicensed frequency band.

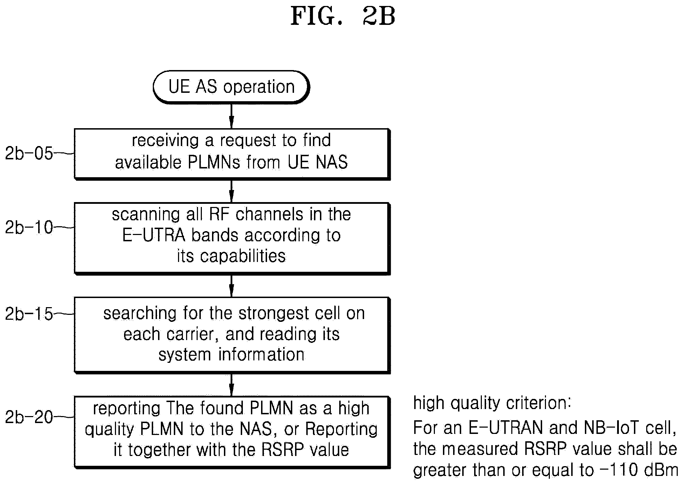

FIG. 2B is a flowchart of a UE AS operation to obtain PLMN information in an LTE mobile communication system according to an embodiment of the present disclosure.

In operation 2b-05, a UE AS may receive a request for collecting PLMN information from a UE non-access stratum (NAS). The UE may be divided into logical entities of an AS and an NAS, in which a role of each entity may differ. For example, the UE AS may perform RRC connection management, RB control, Mobility functions, UE measurement reporting and control, etc., and the UE NAS may perform bearer management, authentication, ECM-IDLE mobility handling, security control, etc.

In operation 2b-10, the UE AS may scan all RF channels (carriers) in a frequency band supportable by the UE AS. According to an embodiment, the UE AS may perform scanning with respect to several stored RF channels.

In operation 2b-15, the UE AS may search for a cell providing the highest signal strength for each carrier and obtain PLMN information from system information broadcast by the cell. It is assumed that in LTE, cells belonging to one carrier supports the same PLMN. It is also assumed that PLMN information carried in the system information broadcast by the cells are the same. Thus, the UE may obtain PLMN information from a cell having the highest signal strength for each carrier.

In operation 2b-20, the UE AS may report the PLMN information collected for each carrier to the UE NAS. When a signal strength of a cell providing the collected PLMN information is better than a particular threshold value, a corresponding PLMN may be indicated as a high-quality PLMN and may be reported to the UE NAS. For example, when the signal strength of the cell is greater than or equal to - 110 dBm, the PLMN may be regarded as the high-quality PLMN. When PLMN information collected from a cell having a signal strength lower than the threshold value, together with a reference signal received power (RSRP) value of the cell, may be reported to the UE NAS. In the present disclosure, the threshold value (e.g., - 110 dBm) may be referred to as a first threshold value. In LTE, the first threshold value may be predetermined.

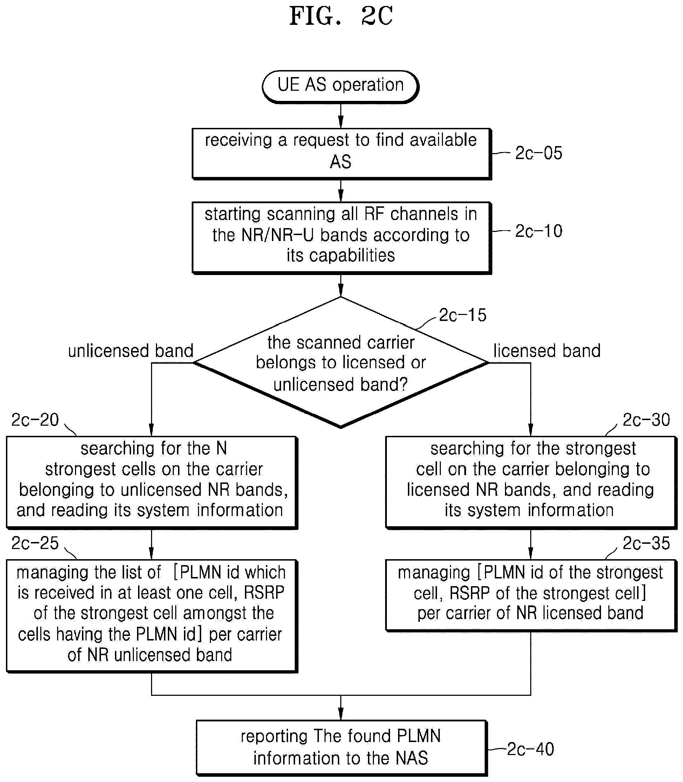

FIG. 2C is a flowchart of a UE AS operation to obtain PLMN information in a next-generation mobile communication system operating in an unlicensed frequency band according to an embodiment of the present disclosure.

As mentioned above, in the unlicensed frequency band, an NR-U supporting base station managed by another operator may be used. A base station or cell of the another operator may provide the best signal strength in a corresponding unlicensed carrier. When PLMN information is collected according to an existing scheme, information of another operator may be collected and reported to the UE NAS. However, in the unlicensed frequency band, a base station or cell of a home operator (having made a contract with a user) may have provided a service. Such a base station or cell may have an opportunity to provide a service through an LBT process even when the base station or cell may not provide the best signal strength. Thus, PLMN information needs to be collected from the cell. PLMN information needs to be also collected from a plurality of cells, taking an LBT failure into account. The present disclosure proposes a method of collecting PLMN information from cells providing N highest signal strengths for every unlicensed band carrier. To exclude cells providing extremely low signal strengths, a new threshold value may be introduced. In the present disclosure, the new threshold value may be referred to as a second threshold value. The threshold value may be useful for reducing the amount of information reported to the UE NAS. The second threshold value may be predetermined, and may be changed or updated through a configuration.

In operation 2c-05, the UE AS may receive a request for collecting PLMN information from the UE NAS. That is, the UE may trigger PLMN information collection when a condition for collecting the PLMN information is satisfied.

In operation 2c-10, the UE AS may scan all RF channels (carriers) in a frequency band supportable by the UE AS. When the UE is capable of supporting NR-U (i.e., an unlicensed band), the UE may also perform scanning with respect to a carrier belonging to the unlicensed frequency band in which NR-U operates.

In operation 2c-15, the UE AS may determine whether the carrier to be scanned belongs to the licensed frequency band or the unlicensed frequency band.

When the carrier to be scanned belongs to the unlicensed frequency band, the UE AS may search for cells providing top N best signal strengths of signals included in the carrier and receive system information from the cells, in operation 2c-20. The system information may include PLMN information supported by the cells. The UE AS may not receive system information from a cell providing an extremely low signal strength. To this end, the UE AS may receive system information from a cell providing a signal strength lower than the second threshold value, but may not obtain PLMN information, even the cell belongs to the cells providing the N best signal strengths.

In operation 2c-25, the UE AS may configure PLMN information to be reported to the UE NAS. There may be several options in a method of configuring the PLMN information to be reported to the UE NAS. The UE AS may receive different PLMN information from a plurality of cells for each unlicensed band carrier, such that basically, each PLMN information may consider cell-specific configuration information for each unlicensed carrier, as below.

PLMN ID (list), RSRP value measured in a cell providing a corresponding PLMN, a cell ID, additional frequency information (whether or not it is an unlicensed band carrier), etc.

Among the cells providing the N best signal strengths, there may be a plurality of cells provided by the home operator. In this case, the PLMN information collected from the cells may be the same as each other, such that redundant information may not need to be reported to the UE NAS. Thus, the UE AS may configure information based on a cell providing the best signal strength among the plurality of cells and report the information to the UE NAS. This may be equally applied to cells of other operators. Consequently, when the plurality of cells providing the same PLMN information are included in the top N cells, information to be reported to the UE NAS may be configured, taking account of a cell having the best signal strength among the plurality of cells providing the same PLMN information without considering all the cells.

Further, information indicating whether a corresponding carrier is the unlicensed band carrier or not may be included. To optimize the amount of information reported to the UE NAS, an RSRP value may be omitted for a cell providing a signal strength that is greater than or equal to the first threshold value, and a PLMN may be regarded as a high-quality PLMN.

According to an embodiment of the present disclosure, PLMN information collected from cells of some other operators may not be needed for the UE NAS. Thus, the UE NAS may provide PLMN white list information indicating PLMN information to be collected (or PLMN black list information indicating PLMN information that does not have to be collected) to the UE AS, in an operation of requesting PLMN collection. The UE AS may not report information about PLMNs that are not included in the PLMN white list information to the UE NAS. The UE AS may not consider a cell providing a PLMN that is not included in the list information in the top N cells.

When the carrier to be scanned belongs to the licensed frequency band, the UE AS may search for one cell providing the best signal strength of a signal included in the carrier and receive system information from the cell, in operation 2c-30. The system information may include PLMN information supported by the cells. A cell providing an extremely low signal strength needs to be excluded. To this end, the UE AS may receive system information from a cell providing a signal strength lower than the second threshold value, but may not obtain PLMN information, even when the cell provides the best signal strength.

In operation 2c-35, the UE AS may configure PLMN information to be reported to the UE NAS. There may be several options in a method of configuring the PLMN information to be reported to the UE NAS. The UE AS may receive PLMN information from the cell providing the best signal strength in the licensed band carrier, in which the PLMN information may basically consider configuration information of the licensed carrier as below.

PLMN ID (list) and RSRP value measured in a cell providing a corresponding PLMN

To optimize the amount of information reported to the UE NAS, an RSRP value may be omitted for a cell providing a signal strength that is greater than or equal to the first threshold value, and the PLMN may be regarded as a high-quality PLMN.

In operation 2c-40, the UE AS may report the collected PLMN information to the UE NAS.

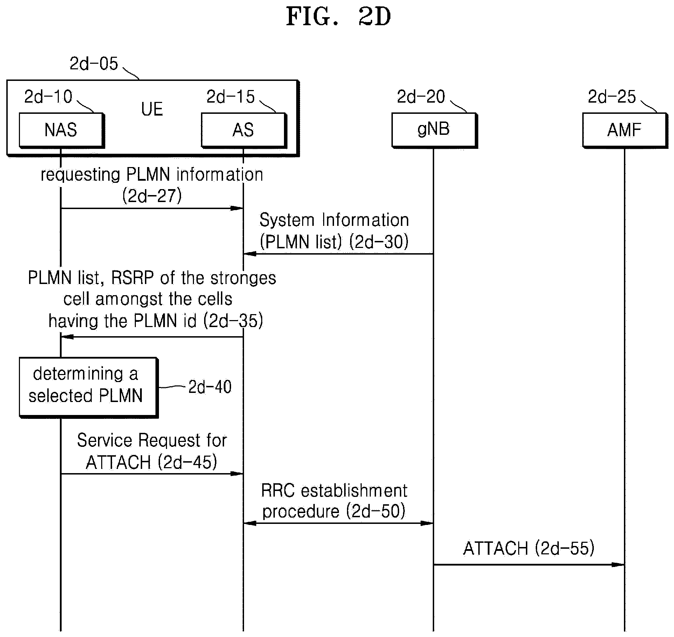

FIG. 2D is a flowchart of a PLMN selection process in a next-generation mobile communication system operating in an unlicensed frequency band according to an embodiment of the present disclosure.

A UE 2d-05 may include a UE NAS 2d-10 and a UE AS 2d-15. The UE NAS 2d-10) may transmit a request for collecting PLMN information to the UE AS 2d-15 in operation 2d-27. The UE AS 2d-15 may perform scanning with respect to all carriers belonging to the licensed frequency band or the unlicensed frequency band in a frequency band supportable by the UE AS 2d-15. The UE AS 2d-15 may receive system information carrying PLMN information from a single cell providing the best signal strength in the licensed band carrier or one or more cells providing N best signal strengths in the unlicensed band carrier, in operation 2d-30. In operation 2c-35, the UE AS 2d-15 may report the collected PLMN information to the UE NAS.

For example, the UE AS 2d-15 may report RSRP information of a cell providing the best signal strength among cells having a PLMN ID list and PLMN IDs for each carrier to the UE NAS. The UE NAS 2d-10 may select one PLMN by using the reported PLMN information, in operation 2d-40. By selecting one of the cells providing the PLMNs according to a rule, the UE NAS may trigger an ATTACH process. The UE AS 2d-15 having received a service request for ATTACH in operation 2d-45 may perform an RRC connection process in operation 2d-50.

Through the foregoing process, the UE may switch to the connected mode, and transmit an ATTACH message to an AMF by using an NAS container carried through an RRC message in operation 2d-55. The ATTACH message may include PLMN information selected by the UE NAS.

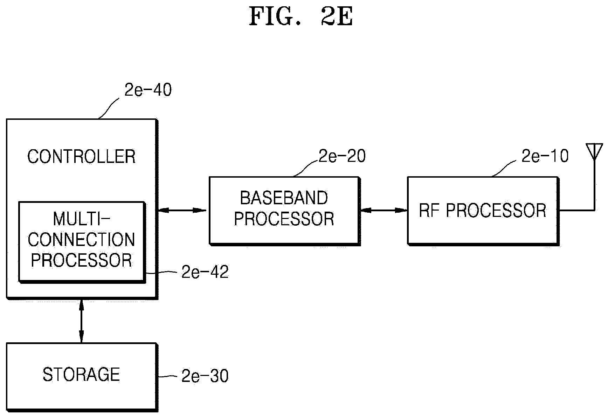

FIG. 2E is a block diagram of a structure of a UE according to an embodiment of the disclosure.

Referring to FIG. 2E, the UE may include an RF processor 2e-10, a baseband processor 2e-20, a storage 2e-30, and a controller 2e-40. Needless to say, the present disclosure is not limited to the foregoing example, and the UE may include components that are more or less than those illustrated in FIG. 2E. The UE illustrated in FIG. 2E may correspond to the above-described UE illustrated in FIG. 1I.

The RF processor 2e-10 may perform a function for transmitting and receiving a signal through a wireless channel, such as band translation, amplification, and so forth. That is, the RF processor 2e-10 up-converts a baseband signal provided from the baseband processor 2e-20 into an RF band signal, transmits the RF band signal through an antenna, and down-converts an RF band signal received through the antenna into a baseband signal. For example, the RF processor 2e-10 may include a transmission filter, a reception filter, an amplifier, a mixer, an oscillator, a DAC, an ADC, and so forth. Needless to say, the disclosure is not limited to the example. Although one antenna is illustrated in FIG. 2E, the UE may also include a plurality of antennas. The RF processor 2e-10 may include a plurality of RF chains. The RF processor 2e-10 may perform beamforming. For the beamforming, the RF processor 2e-10 may adjust phases and magnitudes of respective signals transmitted and received through multiple antennas or antenna elements. The RF processor 2e-10 may also perform MIMO and may receive several layers when performing MIMO operations.

The baseband processor 2e-20 may perform conversion between a baseband signal and a bitstream according to physical layer standards of a system. For example, in data transmission, the baseband processor 2e-20 may generate complex symbols by encoding and modulating a transmission bitstream. In data reception, the baseband processor 2e-20 may reconstruct a received bitstream by demodulating and decoding the baseband signal provided from the RF processor 2e-10. For example, when OFDM is used, in data transmission, the baseband processor 2e-20 may generate complex symbols by encoding and modulating a transmission bitstream, map the complex symbols to subcarriers, and configure OFDM symbols through IFFT and CP insertion. Also, in data reception, the baseband processor 2e-20 divides the baseband signal provided from the RF processor 2e-10 in the unit of an OFDM symbol, reconstructs the signals mapped to the subcarriers through FFT, and reconstructs the received bitstream through demodulation and decoding.

The baseband processor 2e-20 and the RF processor 2e-10 may transmit and receive a signal as described above. The baseband processor 2e-20 and the RF processor 2e-10 may also be called a transmitter, a receiver, a transceiver, or a communicator. Moreover, at least one of the baseband processor 2e-20 and the RF processor 2e-10 may include multiple communication modules for supporting multiple different radio access technologies. In addition, at least one of the baseband processor 2e-20 and the RF processor 2e-10 may include multiple communication modules for processing signals in different frequency bands. For example, the different radio access technologies may include a wireless LAN (e.g., IEEE 802.11), a cellular network (e.g., LTE), and the like. In addition, the different frequency bands may include a super high frequency (SHF, e.g., 2.NRHz, NRhz) band, and a millimeter wave (mm-wave, e.g., 60 GHz) band. The UE may transmit and receive a signal to and from a base station by using the baseband processor 2e-20 and the RF processor 2e-10, in which the signal may include control information and data.

The storage 2e-30 may store data such as a basic program for operations of the UE, an application program, configuration information, and so forth. In particular, the storage 2e -30 may store information related to a second connection node for performing wireless communication by using a second wireless connection technique. The storage 2e-30 may provide the stored data at the request of the controller 2e-40. The storage 2e-30 may include a storage medium such as ROM, RAM, hard-disk, CD-ROM, DVD, etc., or a combination thereof. The storage 2e-30 may also include a plurality of memories. According to an embodiment, the storage 2e-30 may store a program for executing a method of obtaining PLMN information according to the present disclosure.

The controller 2e-40 may control overall operations of the UE. For example, the controller 2e-40 may transmit and receive a signal through the baseband processor 2e-20 and the RF processor 2e-10. The controller 2e-40 may record and read data from and in the storage 2e-30. To this end, the controller 2e-40 may include at least one processor. For example, the controller 2e-40 may include a communication processor (CP) for performing control for communication and an application processor (AP) for controlling a higher layer such as an application program. At least one component of the UE may be implemented with one chip.

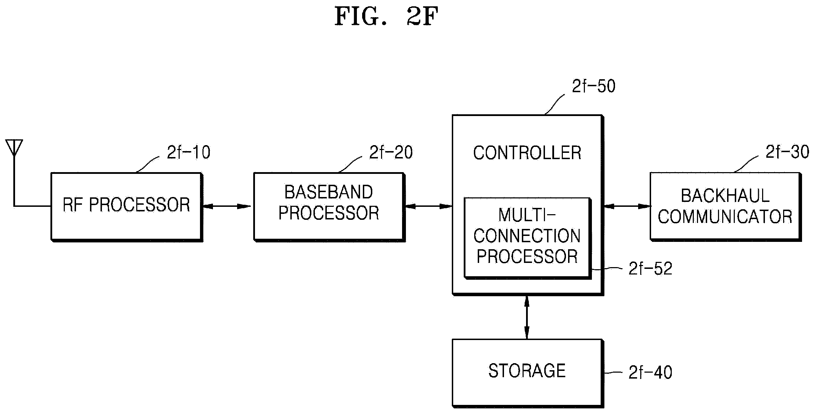

FIG. 2F is a block diagram of a main base station in a wireless communication system according to an embodiment of the present disclosure.

Referring to FIG. 2F, the base station may include an RF processor 2f-10, a baseband processor 2f-20, a backhaul communicator 2f-30, a storage 2f-40, and a controller 2f-50. Needless to say, the present disclosure is not limited to the foregoing example, and the base station may include components that are more or less than those illustrated in FIG. 2F. The base station illustrated in FIG. 2f may correspond to the above-described UE illustrated in FIG. 1J.

The RF processor 2f-10 may perform a function for transmitting and receiving a signal through a wireless channel, such as band translation, amplification, and so forth. That is, the RF processor 2f-10 may up-convert a baseband signal provided from the baseband processor 2f-20 into an RF band signal, transmit the RF band signal through an antenna, and down-convert an RF band signal received through the antenna into a baseband signal. For example, the RF processor 2f-10 may include a transmission filter, a reception filter, an amplifier, a mixer, an oscillator, a DAC, an ADC, and so forth. Although one antenna is illustrated in FIG. 2F, the RF processor 2f-10 may also include a plurality of antennas. The RF processor 2f-10 may include a plurality of RF chains. The RF processor 2f-10 may perform beamforming. For the beamforming, the RF processor 2f-10 may adjust phases and magnitudes of respective signals transmitted and received through multiple antennas or antenna elements. The RF processor 2f-10 may perform downward MIMO operations by transmitting one or more layers.

The baseband processor 2f-20 may perform conversion between a baseband signal and a bitstream according to physical layer standards of the first wireless connection technique. For example, in data transmission, the baseband processor 2f-20 may generate complex symbols by encoding and modulating a transmission bitstream. In data reception, the baseband processor 2f-20 may reconstruct a received bitstream by demodulating and decoding the baseband signal provided from the RF processor 2f-10. For example, when OFDM is used, in data transmission, the baseband processor 2f-20 may generate complex symbols by encoding and modulating a transmission bitstream, map the complex symbols to subcarriers, and configure OFDM symbols through IFFT and CP insertion. Also, in data reception, the baseband processor 2f-20 divides the baseband signal provided from the RF processor 2f-10 in the unit of an OFDM symbol, reconstructs the signals mapped to the subcarriers through FFT, and reconstructs the received bitstream through demodulation and decoding. The baseband processor 2f-20 and the RF processor 2f-10 may transmit and receive a signal as described above. Thus, the baseband processor 2f-20 and the RF processor 2f-10 may be indicated by a transmitter, a receiver, a transceiver, a communicator, or a wireless communicator. The base station may transmit and receive a signal to and from a UE by using the baseband processor 2f-20 and the RF processor 2f-10, in which the signal may include control information and data.

The backhaul communicator 2f-30 may provide an interface for performing communication with other nodes in a network. That is, the backhaul communicator 2f-30 may convert a bitstream transmitted from a main base station to another node, e.g., an auxiliary base station, a core network, etc., into a physical signal, and convert a physical signal received from the another node into a bitstream. The backhaul communicator 2f-30 may be included in a communicator.

The storage 2f-40 stores data such as a basic program for operations of the main base station, an application program, configuration information, and so forth. In particular, the storage 2f-40 stores information about a bearer allocated to the connected UE, and a measurement result reported from the connected UE. The storage 2f-40 stores information that is a criterion for determining whether to provide or stop multiple connections to the UE. The storage 2f-40 provides the stored data at the request of the controller 2f-50. The storage 2f-40 may include a storage medium such as read only memory (ROM), random access memory (RAM), hard-disk, compact disc (CD)-ROM, digital versatile disc (DVD), etc., or a combination thereof. The storage 2f-40 may also include a plurality of memories. According to an embodiment, the storage 2f-40 may store a program for executing a method of obtaining PLMN information according to the present disclosure.

The controller 2f-50 controls overall operations of the main base station. For example, the controller 2f-50 may transmit and receive a signal through the baseband processor 2f-20 and the RF processor 2f-10 or through the backhaul communicator 2f-30. The controller 2f-50 may record and read data from and in the storage 2f-40. To this end, the controller 2f-50 may include at least one processor. At least one component of the base station may be implemented with one chip.

The methods according to the embodiments of the disclosure described in the claims or specification of the disclosure may be implemented by hardware, software, or a combination thereof.

When the methods are implemented by software, a computer-readable storage medium having stored therein one or more programs (software modules) may be provided. The one or more programs stored in the computer-readable storage medium may be configured for execution by one or more processors in an electronic device. The one or more programs include instructions that cause the electronic device to execute the methods according to the embodiments described in the claims or the specification of the disclosure.

These programs (software modules and software) may be stored in random access memories (RAMs), non-volatile memories including flash memories, read only memories (ROMs), electrically erasable programmable ROMs (EEPROMs), magnetic disc storage devices, compact disc-ROMs (CD-ROMs), digital versatile discs (DVDs), other types of optical storage devices, or magnetic cassettes. The programs may be stored in a memory configured by a combination of some or all of such storage devices. Also, each of the memories may be provided in plurality.

The programs may be stored to an attachable storage device of the electronic device accessible via the communication network such as Internet, Intranet, a local area network (LAN), a wireless LAN (WLAN), or storage area network (SAN), or a communication network by combining the networks. The storage device may access a device performing the embodiment of the disclosure through an external port. In addition, a separate storage device on a communication network may access a device performing an embodiment of the disclosure.

In the above-described detailed embodiments of the disclosure, components included in the disclosure have been expressed as singular or plural according to the provided detailed embodiments of the disclosure. However, singular or plural expressions have been selected properly for a condition provided for convenience of a description, and the disclosure is not limited to singular or plural components and components expressed as plural may be configured as a single component or a component expressed as singular may also be configured as plural components.

While embodiments of the disclosure have been described, various changes may be made without departing the scope of the disclosure. Therefore, the scope of the disclosure should be defined by the appended claims and equivalents thereof, rather than by the described embodiments of the disclosure. In other words, it is apparent to one of ordinary skill in the art that various changes may be made thereto without departing from the scope of the present disclosure as defined by the claims. Further, the embodiments of the disclosure may be practiced in combination. For example, a base station and a terminal may be managed by combining parts of methods proposed in the present disclosure. Although the embodiments of the disclosure have been described based on 5G and the NR system, modified examples based on the embodiments may also be carried out in other systems such as LTE, LTE-A, LTE-A-Pro systems, etc.

## Claims

1. A method of obtaining public land mobile network, PLMN, information performed by a user equipment, UE, (2a-15; 2d-05), wherein the UE comprises a UE access stratum, AS, (2d-15) and a UE non-AS, NAS (2d-10); the method comprising:
receiving (2c-05, by the UE access stratum, AS, (2d-15) a request for collecting the PLMN information from the UE non-AS, NAS (2d-10);
scanning (2c-10), by the UE AS, at least one carrier in a frequency band;
determining (2c-15) by the UE AS, whether the at least one carrier belongs to a licensed frequency band or an unlicensed frequency band;
in case that the at least one carrier belongs to a licensed frequency band, obtaining (2c-30, 2c-35;), by the UE AS, the PLMN information including a PLMN identity from a single cell having a highest signal strength;
in case that the at least one carrier belongs to an unlicensed frequency band, obtaining (2c-20, 2c-25), by the UE AS, the PLMN information including a plurality of PLMN identities corresponding to a plurality of cells having strongest signal strengths; and
providing (2c-40), by the UE AS to the UE NAS, the obtained PLMN information.

2. The method of claim 1, wherein the PLMN information further includes at least one of a PLMN identification, ID, list, reference signal received power (RSRP) values measured from each of the plurality of cells, IDs of the plurality of cell, or information indicating whether the at least one carrier belongs to the unlicensed frequency band.

3. The method of claim 1, wherein, the providing, by the UE AS to the UE NAS, of the obtained PLMN information comprises providing, by the UE AS, PLMN information of a cell having a signal strength greater than or equal to predetermined signal strength, and
wherein the predetermined signal strength is -110dBm.

4. The method of claim 1, wherein the providing, by the UE AS to the UE NAS, of the obtained PLMN information comprises providing PLMN information of a cell having a highest signal strength among cells providing identical PLMN information.

5. The method of claim 1, wherein, the providing, by the UE AS to the UE NAS, of the obtained PLMN information comprises providing, by the UE AS, PLMN information of a cell having a signal strength lower than predetermined signal strength, and a RSRP value corresponding to the cell, and
wherein the predetermined signal strength is -110dBm.

6. The method of claim 1, further comprising:
selecting, by the UE NAS, one PLMN based on the obtained PLMN information; and
selecting, by the UE NAS, one of cells providing the selected PLMN.

7. A user equipment, UE, (2a-15; 2d-05) obtaining public land mobile network, PLMN, information, the UE comprising:
a UE access stratum, AS, (2d-15) and a UE non-AS, NAS (2d-10);
a transceiver (2e-10); and
a controller (2e-40) coupled with the transceiver and configured to:
receive, by the UE access stratum, AS, a request for collecting the PLMN information from the UE non-AS, NAS;
scan, by the UE AS, at least one carrier in a frequency band;
determine, by the UE AS, whether the at least one carrier belongs to an unlicensed frequency band;
in case that the at least one carrier belongs to a licensed frequency band, obtain, by the UE AS, the PLMN information including a PLMN identity from a single cell having a highest signal strength;
in case that the at least one carrier belongs to an unlicensed frequency band, obtain, by the UE AS, the PLMN information including a plurality of PLMN identities corresponding to a plurality of cells having strongest signal strengths; and
provide, by the UE AS to the UE NAS, the obtained PLMN information.

8. The UE of claim 7, wherein the PLMN information further includes at least one of a PLMN identification, ID, list, reference signal received power (RSRP) values measured from each of the plurality of cells, IDs of the plurality of cell, or information indicating whether the at least one carrier belongs to the unlicensed frequency band.

9. The UE of claim 7, wherein the controller is further configured to provide PLMN information of a cell having a signal strength greater than or equal to a predetermined signal strength, and
wherein the predetermined signal strength is -110 dBm.

10. The UE of claim 8, wherein the controller is further configured to provide PLMN information of a cell having a signal strength lower than a predetermined signal strength and a RSRP value corresponding to the cell, and
wherein the predetermined signal strength is -110dBm.

11. The UE of claim 8, wherein the controller is further configured to:
select, by the UE NAS, one PLMN based on the obtained PLMN information; and
select, by the UE NAS, one of cells providing the selected PLMN.

## Patentansprüche

1. Verfahren zum Erhalten von PLMN(öffentliches terrestrisches Mobilfunknetz)-Informationen, das von einem Benutzergerät, UE, (2a-15; 2d-05) ausgeführt wird, wobei das UE eine UE-Zugangsschicht, AS, (2d-15) und eine UE-Nicht-AS, NAS (2d-10) umfasst; wobei das Verfahren Folgendes umfasst:
Empfangen (2c-05) einer Anforderung zum Sammeln der PLMN-Informationen durch die UE-Zugangsschicht, AS, (2d-15) von der UE-Nicht-AS, NAS (2d-10);
Scannen (2c-10) mindestens eines Trägers in einem Frequenzband durch die UE-AS;
Bestimmen (2c-15), ob der mindestens eine Träger zu einem lizenzierten Frequenzband oder einem nicht lizenzierten Frequenzband gehört, durch die UE-AS;
falls der mindestens eine Träger zu einem lizenzierten Frequenzband gehört, Erhalten (2c-30, 2c-35;) der PLMN-Informationen einschließlich einer PLMN-Identität durch die UE-AS von einer einzelnen Zelle mit einer höchsten Signalstärke;
falls der mindestens eine Träger zu einem nicht lizenzierten Frequenzband gehört, Erhalten (2c-20, 2c-25) der PLMN-Informationen einschließlich einer Vielzahl von PLMN-Identitäten, die einer Vielzahl von Zellen mit den stärksten Signalstärken entsprechen, durch die UE-AS; und
Bereitstellen (2c-40) der erhaltenen PLMN-Informationen durch die UE-AS an die UE-NAS.

2. Verfahren nach Anspruch 1, wobei die PLMN-Informationen ferner eine PLMN-Identifikations(ID)-Liste, von jeder der Vielzahl von Zellen gemessenen Referenzsignalempfangsleistungs(RSRP)-Werte, IDs der Vielzahl von Zellen und/oder Informationen enthalten, die anzeigen, ob der mindestens eine Träger zu dem nicht lizenzierten Frequenzband gehört.

3. Verfahren nach Anspruch 1, wobei das Bereitstellen der erhaltenen PLMN-Informationen durch die UE-AS an die UE-NAS das Bereitstellen von PLMN-Informationen einer Zelle mit einer Signalstärke, die höher als oder gleich der vorbestimmten Signalstärke ist, durch die UE-AS umfasst, und
wobei die vorbestimmte Signalstärke -110 dBm beträgt.

4. Verfahren nach Anspruch 1, wobei das Bereitstellen der erhaltenen PLMN-Informationen durch die UE-AS an die UE-NAS das Bereitstellen von PLMN-Informationen einer Zelle mit einer höchsten Signalstärke unter Zellen umfasst, die identische PLMN-Informationen bereitstellen.

5. Verfahren nach Anspruch 1, wobei das Bereitstellen der erhaltenen PLMN-Informationen durch die UE-AS an die UE-NAS das Bereitstellen von PLMN-Informationen einer Zelle mit einer Signalstärke, die niedriger als die vorbestimmte Signalstärke ist, und eines der Zelle entsprechenden RSRP-Werts durch die UE-AS umfasst, und
wobei die vorbestimmte Signalstärke -110 dBm beträgt.

6. Verfahren nach Anspruch 1, das ferner Folgendes umfasst:
Auswählen eines PLMN basierend auf den erhaltenen PLMN-Informationen durch die UE-NAS; und
Auswählen einer der Zellen, die das ausgewählte PLMN bereitstellen, durch die UE-NAS.

7. Benutzergerät, UE, (2a-15; 2d-05), das PLMN(öffentliches terrestrisches Mobilfunknetz)-Informationen erhält, wobei das UE Folgendes umfasst:
eine UE-Zugangsschicht, AS, (2d-15) und eine UE-Nicht-AS, NAS (2d-10);
einen Transceiver (2e-10); und
eine Steuerung (2e-40), die mit dem Transceiver gekoppelt und zu Folgendem konfiguriert ist:
Empfangen einer Anforderung zum Sammeln der PLMN-Informationen durch die UE-Zugangsschicht, AS, von der UE-Nicht-AS, NAS;
Scannen mindestens eines Trägers in einem Frequenzband durch die UE-AS;
Bestimmen, ob der mindestens eine Träger zu einem nicht lizenzierten Frequenzband gehört, durch die UE-AS;
falls der mindestens eine Träger zu einem lizenzierten Frequenzband gehört, Erhalten der PLMN-Informationen einschließlich einer PLMN-Identität durch die UE-AS von einer einzelnen Zelle mit einer höchsten Signalstärke;
falls der mindestens eine Träger zu einem nicht lizenzierten Frequenzband gehört, Erhalten der PLMN-Informationen einschließlich einer Vielzahl von PLMN-Identitäten, die einer Vielzahl von Zellen mit den stärksten Signalstärken entsprechen, durch die UE-AS; und
Bereitstellen der erhaltenen PLMN-Informationen durch die UE-AS an die UE-NAS.

8. UE nach Anspruch 7, wobei die PLMN-Informationen ferner eine PLMN-Identifikations(ID)-Liste, von jeder der Vielzahl von Zellen gemessenen Referenzsignalempfangsleistungs(RSRP)-Werte, IDs der Vielzahl von Zellen und/oder Informationen enthalten, die anzeigen, ob der mindestens eine Träger zu dem nicht lizenzierten Frequenzband gehört.

9. UE nach Anspruch 7, wobei die Steuerung ferner so konfiguriert ist, dass sie PLMN-Informationen einer Zelle mit einer Signalstärke bereitstellt, die höher als oder gleich einer vorbestimmten Signalstärke ist, und
wobei die vorbestimmte Signalstärke -110 dBm beträgt.

10. UE nach Anspruch 8, wobei die Steuerung ferner so konfiguriert ist, dass sie PLMN-Informationen einer Zelle mit einer Signalstärke, die niedriger als eine vorbestimmte Signalstärke ist, und einen der Zelle entsprechenden RSRP-Wert bereitstellt, und
wobei die vorbestimmte Signalstärke -110 dBm beträgt.

11. UE nach Anspruch 8, wobei die Steuerung ferner zu Folgendem konfiguriert ist:
Auswählen eines PLMN basierend auf den erhaltenen PLMN-Informationen durch die UE-NAS; und
Auswählen eine der Zellen, die das ausgewählte PLMN bereitstellen, durch die UE-NAS.

## Revendications

1. Procédé d'obtention d'informations de réseau mobile terrestre public, PLMN, exécuté par un équipement utilisateur, UE, (2a-15 ; 2d-05), où l'UE comprend une strate d'accès, AS, UE (2d-15) et une non-AS, NAS, UE (2d-10) ; le procédé comprenant :
recevoir (2c-05), par la strate d'accès, AS, UE (2d-15) une demande de collecte des informations PLMN de la non-AS, NAS, UE (2d-10) ;
balayer (2c-10), par l'AS UE, au moins une porteuse dans une bande de fréquences ;
déterminer (2c-15) par l'AS UE, si l'au moins une porteuse appartient à une bande de fréquences sous licence ou à une bande de fréquences sans licence ;
dans le cas où l'au moins une porteuse appartient à une bande de fréquences sous licence, obtenir (2c-30, 2c-35), par l'AS UE, les informations PLMN incluant une identité PLMN à partir d'une seule cellule ayant l'intensité de signal la plus élevée ;
dans le cas où l'au moins une porteuse appartient à une bande de fréquences sans licence, obtenir (2c-20, 2c-25), par l'AS UE, les informations PLMN incluant une pluralité d'identités PLMN correspondant à une pluralité de cellules ayant les intensités de signal les plus fortes ; et
fournir (2c-40), par l'AS UE à la NAS UE, les informations PLMN obtenues.

2. Procédé de la revendication 1, où les informations PLMN incluent en outre au moins l'un parmi une liste d'identification, ID, PLMN, des valeurs de puissance reçue de signal de référence (RSRP) mesurées à partir de chacune de la pluralité de cellules, des ID de la pluralité de cellules, ou des informations indiquant si l'au moins une porteuse appartient à la bande de fréquences sans licence.

3. Procédé de la revendication 1, où la fourniture, par l'AS UE à la NAS UE, des informations PLMN obtenues comprend la fourniture, par l'AS UE, d'informations PLMN d'une cellule ayant une intensité de signal supérieure ou égale à l'intensité de signal prédéterminée, et
où l'intensité de signal prédéterminée est de -110 dBm.

4. Procédé de la revendication 1, où la fourniture, par l'AS UE à la NAS UE, des informations PLMN obtenues comprend la fourniture d'informations PLMN d'une cellule ayant l'intensité de signal la plus élevée parmi les cellules fournissant des informations PLMN identiques.

5. Procédé de la revendication 1, où la fourniture, par l'AS UE à la NAS UE, des informations PLMN obtenues comprend la fourniture, par l'AS UE, d'informations PLMN d'une cellule ayant une intensité de signal inférieure à l'intensité de signal prédéterminée, et une valeur RSRP correspondant à la cellule, et
où l'intensité de signal prédéterminée est de -110 dBm.

6. Procédé de la revendication 1, comprenant en outre :
sélectionner, par la NAS UE, un PLMN sur la base des informations PLMN obtenues ; et
sélectionner, par la NAS UE, l'une des cellules fournissant le PLMN sélectionné.

7. Équipement utilisateur (2a-15 ; 2d-05) obtenant des informations de réseau mobile terrestre public, PLMN, l'UE comprenant :
une strate d'accès, AS, UE (2d-15) et une strate non-AS, NAS, UE (2d-10) ;
un émetteur-récepteur (2e- 10) ; et
un contrôleur (2e-40) couplé à l'émetteur-récepteur et configuré pour :
recevoir, par la strate d'accès, AS, UE une demande de collecte des informations PLMN de la non-AS, NAS, UE ;
balayer, par l'AS UE, au moins une porteuse dans une bande de fréquences ;
déterminer, par l'AS UE, si l'au moins une porteuse appartient à une bande de fréquences sans licence ;
dans le cas où l'au moins une porteuse appartient à une bande de fréquences sous licence, obtenir, par l'AS UE, les informations PLMN incluant une identité PLMN à partir d'une seule cellule ayant l'intensité de signal la plus élevée ;
dans le cas où l'au moins une porteuse appartient à une bande de fréquences sans licence, obtenir, par l'AS UE, les informations PLMN incluant une pluralité d'identités PLMN correspondant à une pluralité de cellules ayant les intensités de signal les plus fortes ; et
fournir, par l'AS UE à la NAS UE, les informations PLMN obtenues.

8. UE de la revendication 7, où les informations PLMN incluent en outre au moins l'un parmi une liste d'identification, ID, PLMN, des valeurs de puissance reçue de signal de référence (RSRP) mesurées à partir de chacune de la pluralité de cellules, des ID de la pluralité de cellules, ou des informations indiquant si l'au moins une porteuse appartient à la bande de fréquences sans licence

9. UE de la revendication 7, où le contrôleur est en outre configuré pour fournir des informations PLMN d'une cellule ayant une intensité de signal supérieure ou égale à une intensité de signal prédéterminée, et
où l'intensité de signal prédéterminée est de -110 dBm.

10. UE de la revendication 8, où le contrôleur est en outre configuré pour fournir des informations PLMN d'une cellule ayant une intensité de signal inférieure à une intensité de signal prédéterminée et une valeur RSRP correspondant à la cellule, et
où l'intensité de signal prédéterminée est de -110 dBm.

11. UE de la revendication 8, où le contrôleur est en outre configuré pour :
sélectionner, par la NAS UE, un PLMN sur la base des informations PLMN obtenues ; et
sélectionner, par la NAS UE, l'une des cellules fournissant le PLMN sélectionné.
